# EUROPÄISCHE PATENTSCHRIFT

(11) **EP 2 446 446 B1**
(45) Veröffentlichungstag und Bekanntmachung des Hinweises auf die Patenterteilung: **14.05.2014**
(21) Anmeldenummer: 11709630.5
(22) Anmeldetag: 21.02.2011
(51) Int. Cl.: G21C 19/10, G21C 19/105, G21C 19/16

(54) **Brennelement-Lademaschine**
Fuel assembly loading machine
Machine de chargement d'assemblage de combustible

(30) Priorität: 06.04.2010 DE 102010014039
(43) Veröffentlichungstag der Anmeldung: 02.05.2012
(73) Patentinhaber: AREVA GmbH, 91052 Erlangen (DE)
(72) Erfinder: WAGNER, Matthias, 63762 Grossostheim (DE); LANGE, Uwe, 63110 Rodgau (DE)
(74) Vertreter: Walkenhorst, Andreas
(86) Internationale Anmeldenummer: PCT/EP2011/000817
(87) Internationale Veröffentlichungsnummer: WO 2011/124297

(56) Entgegenhaltungen:
- DE-A1- 2 756 370
- DE-A1- 3 109 249
- DE-B- 1 764 176

## Beschreibung

Die Erfindung betrifft eine Brennelement-Lademaschine mit einem Führungsmast und mit teleskopartig aus dem Führungsmast absenkbaren und wieder anhebbaren Teleskopelementen in Gestalt einer Zentrierglocke, eines Brennelementgreifers und eines Steuerelementgreifers, wobei die Teleskopelemente derart miteinander gekoppelt und mit einem gemeinsamen Haupthubwerk wirkverbunden sind, dass beim Anheben der Teleskopelemente aus der abgesenkten Stellung zunächst der Steuerelementgreifer den Brennelementgreifer und dann der Brennelementgreifer die Zentrierglocke mitnimmt, und wobei der Führungsmast einen Festanschlag aufweist, der die beim Absenken erreichbare Endposition der Zentrierglocke festlegt.

Derartige Brennelement-Lademaschinen zur Handhabung und zum Transport von Brennelementen in einem Druckwasserreaktor sind beispielsweise aus den deutschen Patenten DE 100 04 100 C2, DE 1 764 176 B und DE 3 109 249 A1 bekannt.

Bei einer derartigen Brennelement-Lademaschine werden beim Hochfahren des Seilzugs, über den die Teleskopelemente miteinander gekoppelt sind, im sogenannten Brennelement-Modus (BE-Modus) vom Steuerelementgreifer nacheinander zunächst der Brennelementgreifer und dann die Zentrierglocke nach oben mitgenommen, bis letztere am oberen Ende des Führungsmastes angelangt ist. Alle Teleskopelemente werden also vollständig bis zumindest an das obere Ende des Führungsmastes hochgefahren. Erst wenn diese Stellung, die so genannte Fahrstellung, erreicht ist, kann die Lademaschine verfahren werden. Damit wird gewährleistet, dass beim Transport eines Brennelements dieses auf alle Fälle vollständig angehoben ist, um zu vermeiden, dass das Brennelement beim Transport beispielsweise an einer Barriere zwischen Reaktor und Brennelement-Lagerbecken hängen bleibt und Beschädigungen hervorruft.

Beim Brennelementwechsel ist der Reaktor abgeschaltet. Um den Produktionsausfall an erzeugter Energie während des Brennelementwechsels möglichst gering zu halten, ist man bestrebt, den Brennelementwechsel in einer möglichst kurzen Zeitspanne durchzuführen.

Zu diesem Zweck wurden neuartige Ladestrategien entwickelt, die in dem deutschen Patent DE 10 2008 005 468 B3 beschrieben sind, die aber aufgrund der oben genannten Einschränkungen bisheriger Brennelement-Lademaschinen nicht oder allenfalls eingeschränkt durchführbar sind. Zwar wurde das Problem bereits in der DE 100 04 100 C2 teilweise vorausgesehen und ansatzweise durch einen an einem Kopfteil (Waagebalken) des Steuerelementgreifers befestigten, bedarfsweise spreizbaren Mitnehmer gelöst, der beim Hubvorgang eine vorzeitige Mitnahme der Zentrierglocke durch den Steuerelementgreifer bewirkt. In der Praxis hat sich diese Lösung aber nur bei lastfreien Fahrten der Brennelement-Lademaschine bewährt, d.h. wenn kein Brennelement transportiert wird.

Der vorliegenden Erfindung liegt die Aufgabe zugrunde, eine Brennelement-Lademaschine der oben genannten Art anzugeben, mit der im Vergleich zur herkömmlichen Technik eine Verkürzung der für den Brennelementwechsel notwendigen Zeit erreicht wird, und mit der man schneller und effektiver als bislang auf eventuell auftretende Zentrierprobleme reagieren kann.

Die Aufgabe wird erfindungsgemäß dadurch gelöst, dass am Führungsmast mindestens ein mittels eines separaten Sonderhubwerkes in Hub- oder Senkrichtung verfahrbarer Anschlag angebracht ist, der mit einem zugehörigen Tragflansch der Zentrierglocke wechselwirkt, so dass die Zentrierglocke durch Anheben des verfahrbaren Anschlags aus ihrer Endposition in eine darüber liegende Zwischen- oder Hubposition anhebbar ist.

Durch eine derartige Ausgestaltung ist unter Beibehaltung der betriebsbewehrten Zentriervorgänge und ohne Einbußen im Hinblick auf sicherheitstechnische Aspekte eine Erweiterung der bisherigen Ladestrategie möglich, indem durch gezielte Aufhebung bzw. Aufbringung der Zentrierung der Zentrierglocke unabhängig vom Haupthubwerk die jeweilige Brennelementposition flexibel, insbesondere seitlich versetzt angefahren werden kann, wie z.B. in der DE 10 2008 005 468 B3 beschrieben.

In vorteilhafter Ausgestaltung ist der separate Hub-/Senkmechanismus für den verfahrbaren Anschlag derart beschaffen, dass die Zentrierglocke aus einer durch den verfahrbaren Anschlag festgelegten Zwischenposition durch Absenken des verfahrbaren Anschlags kontinuierlich und sanft in die durch den Festanschlag begrenzte Endposition bewegbar ist. Das heißt, das Gewicht der Zentrierglocke wird beim Absenken des verfahrbaren Anschlags aus seiner Hubposition am Ende des Senkvorgangs an den Festanschlag im Führungsmast übergeben; der verfahrbare Anschlag und das zu seiner Betätigung vorgesehene Sonderhubwerk werden dann entlastet.

Vorzugsweise umfasst der verfahrbare Anschlag eine Anzahl von Halteelementen, Bolzen oder Stiften, die durch zugehörige Führungsöffnungen im Führungsmast hindurchgreifen, und die innerhalb der Führungsöffnungen mit einer Bewegungskomponente in Hub- oder Senkrichtung verschiebbar sind. Für eine gute Zugänglichkeit, etwa bei Wartungsarbeiten, ist das Sonderhubwerk am oberen Ende des Führungsmastes oder oberhalb davon angeordnet, z.B. an oder in der Laufkatze der Brennelement-Lademaschine, und ist über eine oder mehrere Hubstangen mit dem verfahrbaren Anschlag verbunden.

In vorteilhafter Ausgestaltung umfasst das Sonderhubwerk einen Spindelhubantrieb mit mindestens einer selbsthemmenden Spindel. Zum Antrieb ist zweckmäßigerweise ein Elektromotor vorgesehen. Das gesamte Sonderhubwerk ist vorzugsweise redundant und ausfallsicher ausgelegt.

Die Zentrierglocke kann zwei separate Tragflansche aufweisen, von denen einer für eine Wechselwirkung mit dem Festanschlag und der andere für eine Wechselwirkung mit dem verfahrbaren Anschlag ausgelegt ist. Alternativ ist nur ein einziger Tragflansch vorgesehen, der sowohl mit dem Festanschlag als auch mit dem verfahrbaren Anschlag wechselwirken kann.

Zweckmäßigerweise umfasst die Brennelement-Lademaschine eine Anzahl von Sensoren, die die zumindest die Endposition, vorzugsweise die vollständige aktuelle Position des verfahrbaren Anschlags direkt oder indirekt erfassen und an einen Leitstand übermitteln. Dabei kann es sich beispielsweise um Endlagenschalter handeln, die direkt durch den verfahraben Anschlag betätigt werden. Alternativ oder zusätzlich können Sensoren im Antriebsstrang des Sonderhubwerks angeordnet sein, z.B. in Form von Winkelkodierern, die im Falle eines Spindelhubantriebs die Stellung der Spindel oder des Elektromotors erfassen.

Die mit der Erfindung erzielten Vorteile bestehen insbesondere darin, dass durch eine gezielte temporäre Aufhebung der Zentrierung der Zentrierglocke durch einen verfahrbaren Anschlag unabhängig vom Haupthubwerk ein gegenüber der Brennelementposition seitlich versetztes Anfahren oder Wegfahren der Brennelement-Lademaschine ermöglicht ist, was zu einer Verkürzung der Brennelement-Wechselvorgänge im Reaktor führt. Dabei kann der größte Teil des Brennelement-Hub- oder -Senkvorgangs ohne Berührung zu den Nachbar-Brennelementen im Reaktorkern erfolgen, mit dem Vorteil der Minimierung der Brennelement-Kontakte und das Risiko von Brennelement-Beschädigungen. Ein weiterer Vorteil besteht darin, dass diese Vorgänge mit erhöhter Geschwindigkeit durchführbar sind, wodurch die Brennelement-Wechselzeit nochmals verkürzt wird. Darüber hinaus sind nunmehr die apparativen Möglichkeiten vorhanden, um unter Ausnutzung des zusätzlichen Hubes des verfahrbaren Anschlags besonders schnell und flexibel auf eventuell auftretende Zentrierprobleme zu reagieren.

Ein Ausführungsbeispiel der Erfindung wird nachfolgend anhand einer Zeichnung näher erläutert. Darin zeigen in jeweils stark vereinfachter und schematisierter Darstellung:
- Fig. 1: eine teilweise geschnittene Seitenansicht einer Brennelement-Lademaschine in einem ersten Betriebszustand, und
- Fig. 2: die Brennelement-Lademaschine gemäß Fig. 1 in einem zweiten Betriebszustand.

Gleiche Teile sind in beiden Figuren mit denselben Bezugszeichen versehen.

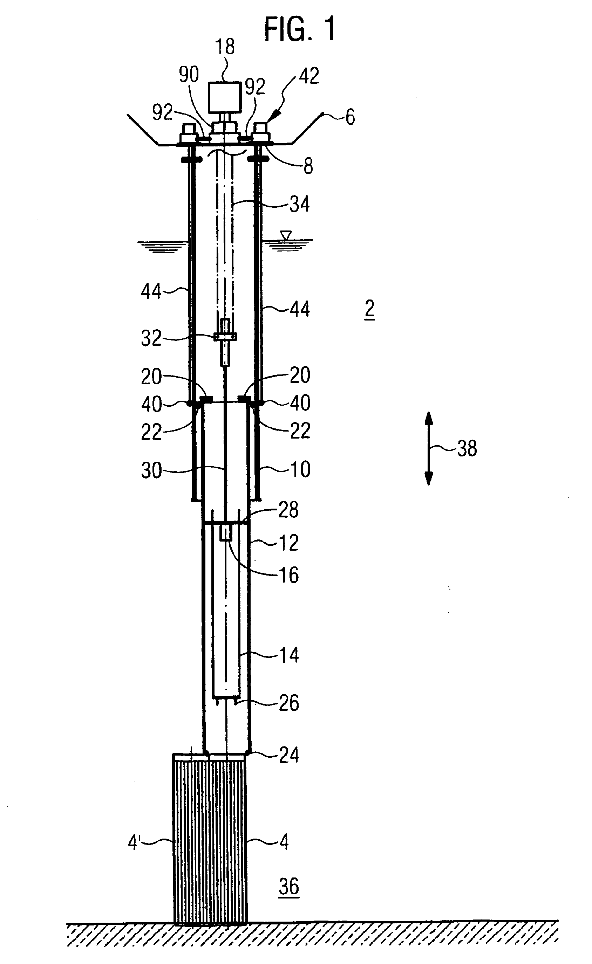

Die in Fig. 1 dargestellte Brennelement-Lademaschine 2 dient zur Handhabung und zum Transport von Brennelementen 4 innerhalb des Reaktorbeckens eines Kernreaktors, hier eines Druckwasserreaktors. Die Brennelement-Lademaschine 2 wird auch zum Transport von Brennelementen 4 zwischen dem Reaktorbecken und einem außerhalb des Druckbehälters des Kernreaktors gelegenen Lagerbecken eingesetzt.

Die Brennelement-Lademaschine 2 umfasst eine hier nur schematisch angedeutete, auf nicht dargestellten Schienen geführte Laufkatze 6, die oberhalb des Wasserspiegels des Reaktorbeckens angeordnet ist. Über eine Flanschverbindung 8 ist an der Laufkatze 6 ein vertikal nach unten in das Reaktorbecken hineinragender Führungsmast 10 angebracht. Der Führungsmast 10 ist als Hohlrohr mit rundem Innenquerschnitt ausgebildet. In dem Führungsmast 10 ist eine Zentrierglocke 12 aufnehmbar, die als Hohlrohr mit quadratischem Querschnitt ausgebildet ist. Die Zentrierglocke 12 ihrerseits nimmt in ihrem Inneren einen als Hohlrohr mit quadratischem Querschnitt ausgebildeten Brennelementgreifer 14 auf. Der Brennelementgreifer 14 ist als Doppelgreifer ausgebildet und nimmt in einem Hohlraum einen Steuerelementgreifer 16 auf. In einer ebenfalls gebräuchlichen, hier aber nicht weiter verwendeten Terminologie kann auch die gesamte Einheit aus Zentrierglocke 12, Brennelementgreifer 14 und Steuerelementgreifer 16 als Doppelgreifer bezeichnet werden.

Die Zentrierglocke 12, der Brennelementgreifer 14 und der Steuerelementgreifer 16 bilden Teleskopelemente, die sich von einem zurückgezogenen, ineinander geschachtelten Zustand (nicht dargestellt) teleskopartig nach unten aus dem Führungsmast 10 herausfahren lassen. Das Herausfahren der Teleskopelemente geschieht aufgrund von deren Eigengewicht. Das Wiedereinfahren der Teleskopelemente wird durch ein an der Laufkatze 6 oder oberhalb davon montiertes Haupthubwerk 18 (hier nur schematisch angedeutet) bewerkstelligt.

Konstruktionsbedingt ist die Bewegung der einzelnen Teleskopelemente derart aufeinander abgestimmt, dass beim Senkvorgang zunächst die Zentrierglocke 12 nach unten aus dem Führungsmast 10 abgesenkt wird, und zwar in der Regel so weit, bis sie ihre in Fig. 1 dargestellte untere Endposition erreicht. Im weiteren Senkbetrieb wird dann nur noch das Absenken des Brennelementgreifers 14 und schließlich des Steuerelementgreifers 16 fortgesetzt, bis auch diese ihre untere Endposition erreicht haben. Im Hubbetrieb ist der Ablauf umgekehrt, wie weiter unten noch im Detail beschrieben wird.

Die Zentrierglocke 12 dient zur Zentrierung und Führung des Brennelementgreifers 14. Die Zentrierglocke 12 selber wird bei der Hub- oder Senkbewegung von mehreren an der Innenseite des Führungsmastes 10 angebrachten Rollenpaaren geführt. Am oberen Ende der Zentrierglocke 12 ist ein Tragflansch 20 angeordnet, der sich einerseits am Ende der Abwärtsbewegung auf den im Führungsmast 10 befestigten unteren Festanschlag 22 absetzt, wodurch die Abwärtsbewegung begrenzt ist, und der andererseits als Mitnehmer bei der Aufwärtsbewegung durch den Brennelementgreifer 14 wirkt. Darüber hinaus betätigt der Tragflansch 20 am Führungsmast 10 befestigte Endlagenschalter.

Am unteren Ende der Zentrierglocke 12 sind acht Zentrierstifte 24 befestigt, und zwar je zwei Stück auf jeder der vier Seiten der Zentrierglocke 12. Kurz bevor die Zentrierglocke 12 die untere Position im Reaktorbecken des Reaktordruckbehälters erreicht hat und sich unmittelbar über dem Ziel-Brennelement 4 (oder der entsprechenden Lücke im Reaktorkern) befindet, dringen die Zentrierstifte 24 in dafür vorgesehene Zentrierbohrungen in den Köpfen der Nachbar-Brennelemente 4' ein und zentrieren dadurch die Zentrierglocke 12. Damit werden auch der Brennelementgreifer 14 und der Steuerelementgreifer 16 über der Zielposition im Brennelement-Gitter zentriert. Dadurch wird einerseits sichergestellt, dass der freie Querschnitt zum Senken oder Heben eines Brennelementes 4 in der erforderlichen Größe vorhanden ist, und dass andererseits die erforderliche Absetztiefe erreicht ist. Außerdem erfolgt dadurch eine Kontrolle gegen unzulässige Schiefstellung der Brennelemente 4 sowie auf den korrekten Sitz der Nachbar-Brennelemente 4'.

In der Zentrierglocke 12 ist der als Hohlrohr mit quadratischem Querschnitt ausgebildete Brennelementgreifer 14 angeordnet. Er trägt an seinem unteren Ende ein Greifwerkzeug 26 zum Greifen eines Brennelementes 4. An seinem oberen Ende ist er durch eine Halteplatte 28 abgeschlossen. Durch eine Ausnehmung in der Halteplatte 28 ist eine Steuerelementgreifer-Hubstange 30 für den innerhalb des Brennelementgreifers 14 befindlichen Steuerelementgreifer 16 hindurchgeführt, der zum Greifen und Handhaben eines in das Brennelement 4 eingeschobenen Steuerelementes (auch als Steuerstab bezeichnet, nicht dargestellt) dient. Die Ausnehmung in der Halteplatte 28 ist derart bemessen, dass der Steuerelementgreifer 16 nicht durch sie hindurch passt. Der Steuerelementgreifer 16 nimmt daher bei seiner Aufwärtsbewegung, sobald er an der Halteplatte 28 anschlägt, den Brennelementgreifer 14 nach oben mit.

Am oberen Ende ist die Steuerelementgreifer-Hubstange 30 durch eine Ausnehmung des Tragflansches 20 der Zentrierglocke 12 hindurchgeführt und mit einem Waagebalken 32 verbunden. An dem Waagebalken 32 seinerseits ist das untere Ende eines Seilzuges 34 befestigt. Am oberen Ende ist der Seilzug 34 an eine elektromotorisch bewegbare Seilwinde des Haupthubwerkes 18 angeschlagen. Der Antrieb des Haupthubwerkes 18 befindet sich aus Gründen der Zugänglichkeit für Wartungsarbeiten und dergleichen am oberen Ende des Führungsmastes 10, beispielsweise oberhalb der Flanschverbindung 8 des Führungsmastes 10 mit der Laufkatze 6.

Beim Senkbetrieb des Haupthubwerkes 18 wird der Steuerelementgreifer 16 über den Seilzug 34 und die über den Waagebalken 32 mit dem Seilzug 34 verbundene Steuerelementgreifer-Hubstange 30 nach unten in Richtung Reaktorkern 36 abgesenkt. Infolge ihres Eigengewichtes bewegen sich der Brennelementgreifer 14 und die Zentrierglocke 12 simultan mit nach unten. Bei Erreichen ihrer Endstellung schlägt die Zentrierglocke 12 mit ihrem Tragflansch 20 an den unteren Festanschlag 22 im Führungsmast 10 an und wird dadurch festgehalten. Das zuvor vom Haupthubwerk 18 getragene Gewicht der Zentrierglocke 12 wird dadurch auf den Führungsmast 10 übertragen. Die Zentrierglocke 12 wird in der bereits oben beschriebenen Weise gegenüber den Nachbar-Brennelementen 4' zentriert.

Im weiteren Senkbetrieb wird dann nur noch das Absenken des Brennelement-greifers 14 und des Steuerelementgreifers 16 fortgesetzt. Beide bewegen sich zunächst simultan weiter nach unten. Sobald der Brennelementgreifer 14 an das zu greifende Brennelement 4 anschlägt und mit ihm verrastet (oder ein zuvor gehaltenes Brennelement 4 in der Zielposition im Kerngitter abgesetzt hat), endet auch die Absenkbewegung des Brennelementgreifers 14. In der letzten Phase des Absenkvorganges bewegt sich dann nur noch der Steuerelementgreifer 16 weiter nach unten, bis auch er mit dem zu greifenden Steuerelement verrastet. Falls die Handhabung des Steuerelementes nicht erforderlich bzw. nicht gewünscht ist, kann dieser letzte Bewegungsabschnitt entfallen, und der Steuerelementgreifer 16 verbleibt gegenüber dem Brennelementgreifer 14 in seiner oberen Anschlagposition.

Im Hubbetrieb ist der Ablauf umgekehrt: Das Haupthubwerk 18 zieht über den Seilzug 34 und die Steuerelementgreifer-Hubstange 30 zunächst den Steuer-elementgreifer 16 nach oben, bis dieser an der Halteplatte 28 des Brennelement-greifers 14 anschlägt und dadurch den Brennelementgreifer 14 mitnimmt. Im weiteren Verlauf des Hubvorganges schlägt dann die Halteplatte 28 des Brennele-mentgreifers 14 an den Tragflansch 20 der Zentrierglocke 12 an, wodurch auch die Zentrierglocke nach oben mitgenommen wird.

Infolge der Zentrierung der Zentrierglocke 12 in den Nachbar-Brennelementen 4' und der oben beschriebenen Verknüpfung des Zentrierglockenhubs mit dem Haupthubwerk 18 kann die Brennelement-Lademaschine 2 nach dem Zentrieren während des gesamten Hub-/Senkvorgangs nicht seitlich verfahren werden. Daraus resultiert eine Einengung der Belaststrategie.

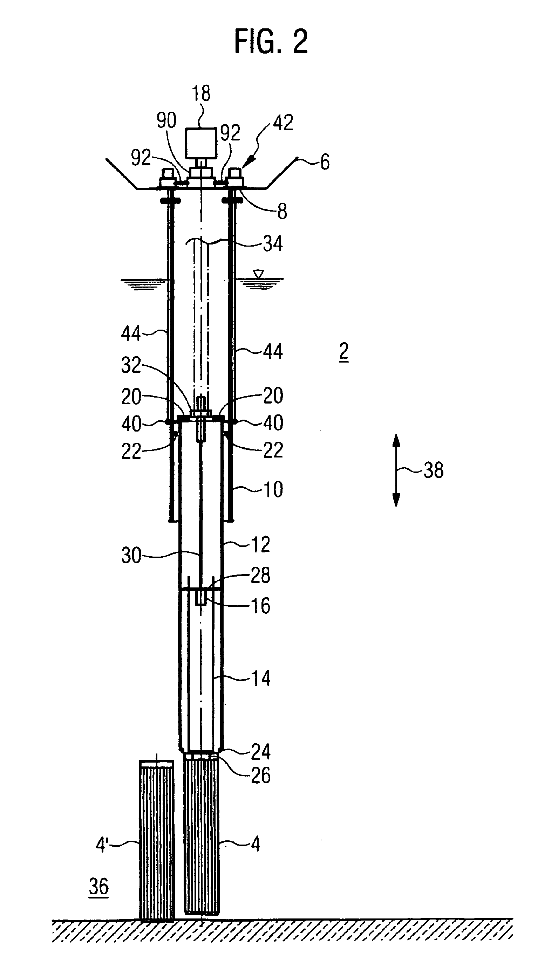

Um diese Limitierung aufzuheben, ist bei der Brennelement-Lademaschine 2 gemäß Fig. 1 ein in Hub-/Senkrichtung 38 verfahrbarer Anschlag 40 im Führungsmast 10 vorgesehen, der über ein vom Haupthubwerk 18 separates und unabhängiges Sonderhubwerk 42 betätigt wird. Der verfahrbare Anschlag 40 hebt bei Bedarf die Zentrierglocke 12 aus ihrer unteren Endstellung, die durch den Festanschlag 22 definiert ist, so weit an, dass die Zentrierung der Zentrierglocke 12 in den Nachbar-Brennelementen 4' aufgehoben wird und ein seitliches Verfahren der Brennelemente-Lademaschine 2 ermöglicht ist. Dadurch ist - ausreichende seitliche Platzverhältnisse im Reaktorkern 36 vorausgesetzt - ein Brennelementtransport bzw. ein "seitlich versetztes Anfahren" der Zielposition mit einer Bewegungskomponente in horizontaler Richtung ermöglicht, und zwar schon bevor das gegriffene Brennelement 4 vollständig aus dem Reaktorkern 36 herausgehoben wurde bzw. noch in der Endphase eines Absetzvorganges, bei der ein abzusetzendes Brennelement 4 schon teilweise in den Reaktorkern 36 abgesenkt wurde. Dies ist in Fig. 2 veranschaulicht.

Konkret umfasst der verfahrbare Anschlag 40 bei der Brennelement-Lademaschine 2 gemäß Fig. 1 mehrere bewegungsmäßig miteinander gekoppelte Stifte oder Halteelemente (nicht dargestellt), die durch zugehörige Ausnehmungen, z.B. schlitzförmige oder kreisförmige Ausnehmungen, in der Außenwand des Führungsmastes 10 hindurchgeführt sind. Diese Ausnehmungen bilden bevorzugt Führungsschienen für die Stifte oder Halteelemente, die darin mit einer Bewegungskomponente in vertikaler Richtung verschiebbar sind. Damit ist in dieser Variante insgesamt eine Kulissenführung verwirklicht. Die Führung der Halteelemente des verfahrbaren Anschlags 40 kann aber auch auf andere Weise bewerkstelligt sein. Die einzelnen Stifte oder Halteelemente können außerhalb der Außenwand des Führungsmastes 10 durch ein mit ihnen verbundenes Gestänge oder eine Rahmenkonstruktion oder dergleichen miteinander gekoppelt sein. Über an der Außenseite des Führungsmastes 10 entlanggeführte Hubstangen 44 wird der durch die Stifte oder Halteelemente gebildete verfahrbare Anschlag 40 betätigt, d.h. in Hub-/Senkrichtung 38 angehoben oder abgesenkt. In alternativer Ausgestaltung können - entsprechende Platzverhältnisse vorausgesetzt - die Hubstangen 44 innerhalb des Führungsmastes 10 angeordnet sein.

Im Inneren des Führungsmastes 10 wechselwirken die Stifte oder Halteelemente je nach Stellung des verfahrbaren Anschlags 40 mit dem Tragflansch 20 der Zentrierglocke 12 und heben diese bedarfsweise an. In der unteren Endlage des verfahrbaren Anschlags müssen die Hubstangen 44 kein Gewicht tragen, und das Sonderhubwerk 42 ist lastfrei. Das Gewicht der Zentrierglocke 12 wird dann vielmehr vollständig vom Festanschlag 22 aufgenommen, auf dem der Tragflansch 20 der Zentrierglocke 12 aufliegt, wenn die Zentrierglocke 12 über das Haupthubwerk 18 vollständig abgesenkt wurde. Die Konstruktion kann auch so sein, dass in der unteren Endlage des verfahrbaren Anschlags 40 die Zentrierglocke 12 auf dem verfahrbaren Anschlag 40 aufliegt, der dann seinerseits auf dem Festanschlag 22 aufliegt. Beim Anheben des verfahrbaren Anschlags 40 nimmt dieser den Tragflansch 20 der Zentrierglocke nach oben mit und hebt die Zentrierglocke 12 gegenüber dem Festanschlag 22 an, wie in Fig. 2 dargestellt. Das Gewicht der Zentrierglocke 12 wird beim Anheben also von dem verfahrbaren Anschlag 40 aufgenommen, der im Hinblick auf diese Tragfunktion hinreichend stabil und belastbar dimensioniert ist. Der verfahrbare Anschlag 40 muss nicht notwendigerweise mit demselben Tragflansch 20 wechselwirken, der in der unteren Endposition der Zentrierglocke 12 auf dem Festanschlag 22 des Führungsmastes 10 aufliegt; es kann für diesen Zweck auch ein davon separater zweiter Tragflansch an der Zentrierglocke 12 vorgesehen sein.

Wie bereits oben beschrieben erfolgt die Betätigung des verfahrbaren Anschlags 40 im Ausführungsbeispiel gemäß Fig. 1 und 2 über die beiden Hubstangen 44. Diese Hubstangen 44 können beispielsweise als Spindelhubstangen ausgebildet sein, die ihrerseits über einen im Bereich der Laufkatze 6 angeordneten Spindelantrieb elektromotorisch angetrieben und betätigt werden. Ein derartiger Spindelantrieb ist naturgemäß selbsthemmend. Bevorzugt betätigt genau ein Antriebsmotor 90 über entspechende Gelenkwellen 92 und Antriebsschnecken zwei jeweils mit einem Gewinde (zur Wechselwirkung mit der zugehörigen Antriebschnecke) versehene Hubstangen 44. Diese Antriebskomponenten bilden insgesamt ein unabhängig vom Haupthubwerk 18 betätigbares Sonderhubwerk 42 zum Anheben und Absenken des verfahrbaren Anschlags 40. Alternative Realisierungen der vertikalen Verfahrfunktion des verfahrbaren Anschlags 40 unter Einsatz geeigneter elektromechanischer und/oder hydraulischer Bau- und Antriebselemente sind denkbar. Aus Redundanzgründen sind bevorzugt zwei oder mehr Sonderhubwerke 42 vorgesehen, wobei jedes Sonderhubwerk alleine seine Aufgabe erfüllen kann, wenn das andere Sonderhubwerk ausfällt.

Zweckmäßigerweise wird die aktuelle Stellung des verfahrbaren Anschlags 40 durch entsprechende Sensoren (nicht dargestellt) messtechnisch erfasst und im Leitstand (nicht dargestellt) der Brennelement-Lademaschine 2 überwacht bzw. visuell dargestellt (z.B. mit Hilfe einer Meldung "Zentrierglocke in Hubstellung" oder dergleichen). Die Positionssignale derartiger Sensoren werden in die Steuerung der Brennelement-Lademaschine 2 eingebunden. Zweckmäßigerweise wird der Hub des verfahrbaren Anschlags 40 in ein automatisiertes Fahrprogramm entsprechend der gewählten Lade-/Entladestrategie aufgenommen, welche soft- oder hardwaremäßig in der Steuer- bzw. Regelelektronik des Leitstandes implementiert ist. Sicherungsroutinen verhindern oder unterdrücken eine ungewollte Betätigung des verfahrbaren Anschlags 40 in bestimmten Betriebssituationen, die mit Hilfe anderer Sensoren erfasst und an den Leitstand gemeldet werden, z.B. wenn sich die Zentrierstifte 24 der Zentrierglocke 12 in den Nachbar-Brennelementen 4' "verhakt" haben. Dabei ist für spezielle Fälle eine manuelle Ansteuerung und Betätigung des verfahrbaren Anschlags 40 unter Umgehung der Automatik vorgesehen.

Die Gesamtlänge des Führungsmastes 10 beträgt beispielsweise 10.000 mm, die der Zentrierglocke 12 ca. 10.300 mm und die des Brennelementgreifers 14 entsprechend der Länge des jeweiligen Brennelementes 4 ca. 5.800 mm. Der Gesamthubweg des Seilzugs 34 beträgt typischerweise 12.000 mm, der Hubweg des verfahrbaren Anschlags 40 beträgt beispielsweise 200 mm. Das Gewicht der Zentrierglocke 12 beträgt beispielsweise 500 bis 1.000 kg, der Brennelementgreifer wiegt etwa 260 kg, und ein einzelnes Brennelement wiegt rund 850 kg.

### Bezugszeichenliste

- 2: Brennelement-Lademaschine
- 4: Brennelement
- 6: Laufkatze
- 8: Flanschverbindung
- 10: Führungsmast
- 12: Zentrierglocke
- 14: Brennelementgreifer
- 16: Steuerelementgreifer
- 18: Haupthubwerk
- 20: Tragflansch
- 22: Festanschlag
- 24: Zentrierstift
- 26: Greifwerkzeug
- 28: Halteplatte
- 30: Steuerelementgeifer-Hubstange
- 32: Waagebalken
- 34: Seilzug
- 36: Reaktorkern
- 38: Hub-/Senkrichtung
- 40: verfahrbarer Anschlag
- 42: Sonderhubwerk
- 44: Hubstange
- 90: Antriebsmotor
- 92: Gelenkwelle

## Patentansprüche

1. Brennelement-Lademaschine (2) mit einem Führungsmast (10) und mit teleskopartig aus dem Führungsmast (10) absenkbaren und wieder anhebbaren Teleskopelementen in Gestalt einer Zentrierglocke (12), eines Brennelementgreifers (14) und eines Steuerelementgreifers (16), wobei die Teleskopelemente derart miteinander gekoppelt und mit einem gemeinsamen Haupthubwerk (18) wirkverbunden sind, dass beim Anheben der Teleskopelemente aus der abgesenkten Stellung zunächst der Steuerelementgreifer (16) den Brennelementgreifer (14) und dann der Brennelementgreifer (14) die Zentrierglocke (12) mitnimmt, und wobei der Führungsmast (10) einen Festanschlag (22) aufweist, der die beim Absenken erreichbare Endposition der Zentrierglocke (12) festlegt, **dadurch gekennzeichnet,**
**dass** am Führungsmast (10) mindestens ein mittels eines separaten Sonderhubwerkes (42) in Hub- oder Senkrichtung (38) verfahrbarer Anschlag (40) angebracht ist, der mit einem zugehörigen Tragflansch (20) der Zentrierglocke (12) wechselwirkt, so dass die Zentrierglocke (12) durch Anheben des verfahrbaren Anschlags (40) aus ihrer Endposition in eine darüber liegende Zwischen- oder Hubposition anhebbar ist.

2. Brennelement-Lademaschine (2) nach Anspruch 1, wobei die Zentrierglocke (12) aus einer durch den verfahrbaren Anschlag (40) festgelegten Zwischen- oder Hubposition durch Absenken des verfahrbaren Anschlags (40) kontinuierlich und sanft in die durch den Festanschlag (22) begrenzte Endposition bewegbar ist.

3. Brennelement-Lademaschine (2) nach Anspruch 1 oder 2, wobei der verfahrbare Anschlag (40) eine Anzahl von Halteelementen umfasst, die durch zugehörige Führungsöffnungen im Führungsmast (10) hindurchgreifen, und die innerhalb der Führungsöffnungen mit einer Bewegungskomponente in Hub- oder Senkrichtung (38) verschiebbar sind.

4. Brennelement-Lademaschine (2) nach einem der Ansprüche 1 bis 3, wobei das Sonderhubwerk (42) am oberen Ende des Führungsmastes (10) angeordnet ist und über eine oder mehrere Hubstangen (44) mit dem verfahrbaren Anschlag (40) verbunden ist.

5. Brennelement-Lademaschine (2) nach einem der Ansprüche 1 bis 4, wobei das Sonderhubwerk (42) einen Spindelhubantrieb umfasst.

6. Brennelement-Lademaschine (2) nach einem der Ansprüche 1 bis 5, wobei die Zentrierglocke (12) einen Tragflansch (20) aufweist, der sowohl mit dem Festanschlag (22) als auch mit dem verfahrbaren Anschlag (40) wechselwirkt.

7. Brennelement-Lademaschine (2) nach einem der Ansprüche 1 bis 6 mit einer Anzahl von Sensoren, die die jeweilige Endposition, bevorzugt auch Zwischenpositionen, des verfahrbaren Anschlags (40) erfassen und an einen Leitstand übermitteln.

## Claims

1. A fuel-element charging machine (2) having a guide mast (10) and telescopic elements which can be telescopically lowered out of the guide mast (10) and raised again and are in the form of a centering bell (12), a fuel-element gripper (14) and a control-element gripper (16), wherein the telescopic elements are coupled to one another and are operatively connected to a common main lifting mechanism (18) in such a way that, when the telescopic elements are raised out of the lowered position, first of all the control-element gripper (16) carries along the fuel-element gripper (14) and then the fuel-element gripper (14) carries along the centering bell (12), and wherein the guide mast (10) has a fixed stop (22), which defines the end position of the centering bell (12), which can be reached during lowering, **characterized in that**
at least one stop (40) is fitted on the guide mast (10), said stop (40) being capable of being moved by means of a separate special lifting mechanism (42) in the lifting or lowering direction (38) and interacting with an associated supporting flange (20) of the centering bell (12), so that the centering bell (12) can be raised out of its end position into an intermediate or lifted position lying above said end position, by the movable stop (40) being raised.

2. The fuel-element charging machine (2) of claim 1, wherein the centering bell (12) can be moved continually and softly from an intermediate or lifted position defined by the movable stop (40) into the end position limited by the fixed stop (22), by the movable stop (40) being lowered.

3. The fuel-element charging machine (2) of claim 1 or 2, wherein the movable stop (40) comprises a plurality of holding elements which pass through associated guide openings in the guide mast (10) and which are displaceable within the guide openings with a movement component in the lifting or lowering direction (38).

4. The fuel-element charging machine (2) according to any of claims 1 to 3, wherein the special lifting mechanism (42) is arranged at the upper end of the guide mast (10) and is connected via one or more lifting rods (44) with the movable stop (40).

5. The fuel-element charging machine (2) according to any of claims 1 to 4, wherein the special lifting mechanism (42) comprises a spindle lifting drive.

6. The fuel-element charging machine (2) according to any of claims 1 to 5, wherein the centering bell (12) includes a supporting flange (20) interacting both with the fixed stop (22) and with the movable stop (40).

7. The fuel-element charging machine (2) according to any of claims 1 to 6, having a plurality of sensors which detect the respective end position, preferably also intermediate positions, of the movable stop (40) and transmit them to a control station.

## Revendications

1. Chargeuse à éléments de combustible (2) ayant un poteau de guidage (10) et des éléments télescopiques qui peuvent être abaissés de manière télescopique hors du poteau de guidage (10) et soulevés à nouveau et qui sont de la forme d'une cloche de centrage (12), d'un preneur d'éléments de combustible (14) et d'un preneur d'éléments de commande (16), dans laquelle les éléments télescopiques sont couplés l'un à l'autre et sont reliés opérativement à un dispositif de levage principal (18) commun de façon à ce que, lorsque les éléments télescopiques sont soulevés de la position abaissée, d'abord, le preneur d'éléments de commande (16) entraîne le preneur d'éléments de combustible (14) et ensuite, le preneur d'éléments de combustible (14) entraîne la cloche de centrage (12), et dans laquelle le poteau de guidage (10) a une butée fixe (22) qui défine la position finale de la cloche de centrage (12), qui peut être atteinte pendant l'abaissement,
**caractérisée en ce que**
au moins une butée (40) est montée au poteau de guidage (10), dite butée (40) pouvant être déplacée au moyen d'un dispositif de levage spécial (42) séparé en direction de levage ou d'abaissement (38) et interagissant avec un collet de support (20) y affecté de la cloche de centrage (12), de manière que la cloche de centrage (12) peut être levée de sa position finale dans une position intermédiaire ou position levée se trouvant au-dessus de dite position finale, par levage de la butée mobile (40).

2. Chargeuse à éléments de combustible (2) selon la revendication 1, dans laquelle la cloche de centrage (12) peut être mue de manière continue et douce d'une position intermédiaire ou position levée définée par la butée mobile (40) dans la position finale limitée par la butée fixe (22), par abaissement de la butée mobile (40).

3. Chargeuse à éléments de combustible (2) selon la revendication 1 ou 2, dans laquelle la butée mobile (40) comprend une pluralité d'éléments de retenue qui passent par des ouvertures de guidage y affectées dans le poteau de guidage (10) et qui sont déplaçables à l'intérieur des ouvertures de guidage avec un composant de mouvement direction de levage ou d'abaissement (38).

4. Chargeuse à éléments de combustible (2) selon l'une quelconque des revendications 1 à 3, dans laquelle le dispositif de levage spécial (42) est agencé au bout supérieur du poteau de guidage (10) et est relié au moyen d'une ou de plusieurs tiges de levage (44) à la butée mobile (40).

5. Chargeuse à éléments de combustible (2) selon l'une quelconque des revendications 1 à 4, dans laquelle le dispositif de levage spécial (42) comprend un entraînement de levage à broche.

6. Chargeuse à éléments de combustible (2) selon l'une quelconque des revendications 1 à 5, dans laquelle la cloche de centrage (12) comprend un collet de support (20) interagissant avec la butée fixe (22) et avec la butée mobile (40).

7. Chargeuse à éléments de combustible (2) selon l'une quelconque des revendications 1 à 6, ayant une pluralité de détecteurs qui détectent la position finale de chaque fois, de préference aussi des positions intermédiaires, de la butée mobile (40) et les transmet à un poste de contrôle.
